# EUROPEAN PATENT SPECIFICATION

(11) **EP 3 693 134 B1**
(45) Date of publication and mention of the grant of the patent: **06.11.2024**
(21) Application number: 20156099.2
(22) Date of filing: 07.02.2020
(51) Int. Cl.: B25B 5/14, B60B 3/14, G01M 1/04

(54) **GRIPPING TOOL FOR ADJUSTABLE WHEEL BALANCING CLAMPING TOOLS**
GREIFWERKZEUG FÜR VERSTELLBARE RADAUSWUCHTSPANNWERKZEUGE
OUTIL DE PRÉHENSION POUR OUTILS DE SERRAGE D'ÉQUILIBRAGE DES ROUES RÉGLABLES

(30) Priority: 08.02.2019 US 201962803171 P
(43) Date of publication of application: 12.08.2020
(73) Proprietor: Hjorth Hansen, Allan, C 8000 Aarhus (DK)
(72) Inventor: Hjorth Hansen, Allan, C 8000 Aarhus (DK)
(74) Representative: Doherty, William

(56) References cited:
- GB-A- 170 283
- GB-A- 2 513 905
- US-A- 3 143 327
- US-A- 4 885 962
- US-A1- 2004 003 646
- US-A1- 2015 069 824

## Description

The current application claims a priority to the U.S. Provisional Patent application serial number 62/803,171 filed on February 08, 2019.

### FIELD OF THE INVENTION

The present invention relates generally to a grip system. More specifically, the present invention relates to a grip system for a wheel balancing clamping tool that can adjust to different bolt patterns.

### BACKGROUND OF THE INVENTION

Existing adjustable wheel balancing clamping tools that can adjust to different bolt patterns require two hands to operate, with one hand holding the tool and the other hand adjusting the bolt pattern of the tool with respect to the wheel. More specifically, the tool is adjusted to fit the specific bolt pattern of the wheel, by rotating one of the gears. Since the adjustable wheel balancing clamping tools require both hands to adjust for a new bolt pattern, the user does not have a free hand to stabilize the tool and/or the wheel, to be balanced, during the mounting process of the wheel to the balancing machine. Therefore, two steps are generally required for balancing a wheel with a new bolt pattern. First, the user must use both hands to hold and adjust the adjustable wheel balancing clamping tool to the correct bolt pattern according to the wheel. Generally, the wheel is flipped and the adjustable wheel balancing clamping tool is positioned against the back of the center bore wheel hub to correctly adjust the adjustable wheel balancing clamping tool according to the bolt pattern of the wheel. Then, the user uses one hand to mount the wheel on a wheel balancing machine, and the other hand to hold the adjustable wheel balancing clamping tool. An example of an existing adjustable wheel balancing clamping tool is D1 (US20150069824) which discloses a wheel lug ring having an annular body with a cavity formed on one side having a plurality of lug wells in a registered positioning to engage around a plurality of lug nuts holding a wheel to an axle.

Document US3143327A discloses an adapter unit for use with a wheel balancing apparatus having the technical characteristics of the preamble of claims 1 and 4.

Clearly, there is a need for an improvement to adjustable wheel balancing clamping tools that allow individuals to hold and adjust the tool with one hand. Such improvement can combine the aforementioned two-step process into a one-step process thus saving time and money. The present invention addresses this issue by providing a gripping tool for the adjustable wheel balancing clamping tool according to claims 1 and 4. The present invention provides additional gripping surface area to the adjustable wheel balancing clamping tool that allows an individual to simultaneously adjust and hold the tool with one hand. The present invention provides the gripping tool for adjustable wheel balancing clamping tool, characterized in that the gripping tool comprises: a gripping body; an adjustable-bolt-pattern-adaptor attachment mechanism; the gripping body comprising an outer annular body, an inner annular body, and a connector ring; the inner annular body being concentrically positioned within the outer annular body; the connector ring being perimetrically connected the outer annular body and the inner annular body; a cross section between the outer annular body, the connector ring, and the inner annular body being a U-shaped cross section; the connector ring being terminally positioned to a first outer edge of the outer annular body and a first inner edge of the inner annular body; the adjustable-bolt-pattern-adaptor attachment mechanism being connected to the outer annular body and the inner annular body; the adjustable-bolt-pattern-adaptor attachment mechanism and the connector ring being oppositely oriented of each other about the outer annular body and the inner annular body; the adjustable-bolt-pattern-adaptor attachment mechanism comprising a plurality of fasteners; the plurality of fasteners being radially positioned in between the outer annular body and the inner annular body; the plurality of fasteners each comprising a supporting rib, a female fastening portion, and a male fastening portion; the supporting rib being terminally connected to the outer annular body, the inner annular body, and the connector ring; the female fastening portion connected to the supporting rib; the female fastening portion being fixed in place along the supporting rib; the female fastening portion being positioned offset from the outer annular body; the female fastening portion being positioned offset from the inner annular body; the female fastening portion being oriented away from the connector ring; the male fastening portion being removably engaged with the female fastening portion; and the male fastening portion and the female fastening portion being threadedly interconnected to each other. Optional features can be found in claims 2,3 and 5.

### BRIEF DESCRIPTION OF THE DRAWINGS

FIG. **1** is a front perspective view of the gripping body of the present invention with the preferred attachment mechanism.
FIG. **2** is a rear perspective view of the gripping body of the present invention with the preferred attachment mechanism.
FIG. **3** is a rear view of the present invention, showing the plane upon which a cross sectional view is taken shown in FIG. **4****.**
FIG. **4** is a cross section view thereof taken along line A-A of FIG. **3****,** showing the edges of the outer annular body and the inner annular body.
FIG. **5** is a perspective exploded view of the present invention, wherein the preferred attachment mechanism is utilized to engage with the adjustable wheel balancing clamping tool.
FIG. **6** is a front perspective view of the gripping body of the present invention, wherein the gripping body is integrated into the base plate of the adjustable wheel balancing clamping tool.
FIG. **7** is a rear perspective view of the gripping body of the present invention, wherein the gripping body is integrated into the base plate of the adjustable wheel balancing clamping tool.
FIG. **8** is a rear view of the present invention being integrated into the base plate of the adjustable wheel balancing clamping tool, showing the plane upon which a cross sectional view is taken shown in FIG. **9****.**
FIG. **9** is a cross section view thereof taken along line A-A of FIG. **8****,** showing the edges of the outer annular body and the inner annular body.
FIG. **10** is a perspective exploded view of the present invention being integrated into the base plate of the adjustable wheel balancing clamping tool, wherein the stud adjustment system is separated from the base plate.
FIG. **11** is another perspective exploded view of the present invention being integrated into the base plate of the adjustable wheel balancing clamping tool, wherein the stud adjustment system is separated from the base plate.
FIG. **12** is a perspective exploded view of alternative embodiment of the present invention as the base plate of the adjustable wheel balancing clamping tool and the gripping tool are being integrated into each other, wherein the stud adjustment system is separated from the base plate.
FIG. **13** is a perspective exploded view of alternative embodiment of the present invention as the base plate of the adjustable wheel balancing clamping tool and the gripping tool are being integrated into each other, wherein the stud adjustment system is separated from the base plate.
FIG. **14** is a perspective exploded view of alternative embodiment of the present invention, wherein the gripping body and the adjustable-bolt-pattern-adaptor attachment mechanism are a plurality of segmented pieces.

### DETAIL DESCRIPTIONS OF THE INVENTION

All illustrations of the drawings are for the purpose of describing selected versions of the present invention and are not intended to limit the scope of the present invention, which is disclosed in the appended claims.

The present invention is a gripping tool for adjustable wheel balancing clamping tool so that the user is able to hold and adjust the adjustable wheel balancing clamping tool with only one hand. More specifically, the adjustable wheel balancing clamping tool enables the user to reliably mount a wheel on a wheel balancing machine in a desired orientation. To accomplish this, the adjustable wheel balancing clamping tool employs a stud adjustment system in order to change the orientation of the studs that engages with lug holes of the wheel. Generally, the user holds the adjustable wheel balancing clamping tool with one hand while the other hand is used to operate the stud adjustment system, which adjust the bolt pattern with respect to the wheel. However, the present invention functions as an accessory tool for the adjustable wheel balancing clamping tool so that the user can hold the adjustable wheel balancing clamping tool and operate the stud adjustment system with one hand.

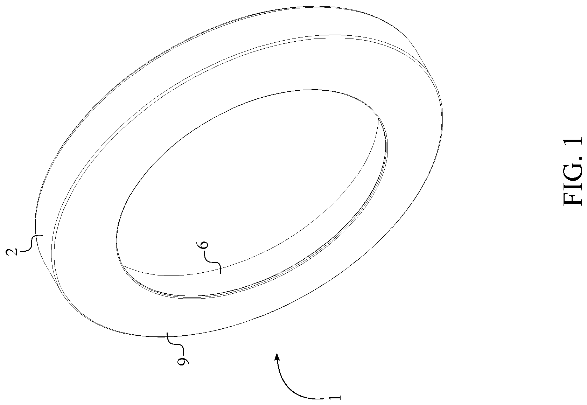

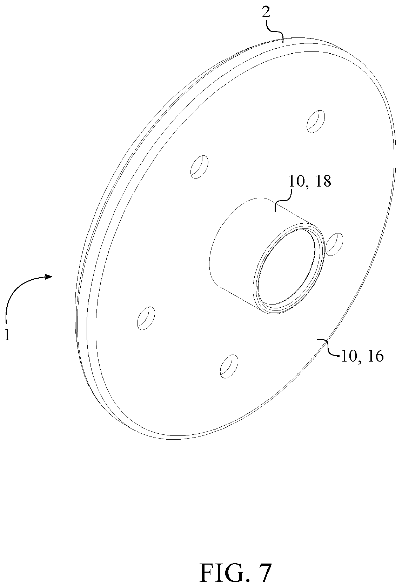

The present invention comprises a gripping body **1** and an adjustable-bolt-pattern-adaptor attachment mechanism **10** as shown in FIG. **1-2** and **6-7.** The gripping body **1** provides ergonomic surface area so that the user can comfortably grasp the present invention. The gripping body **1** comprises an outer annular body **2,** an inner annular body **6,** and a connector ring **9** thus delineating ring shaped body. In reference to the general configuration of the present invention, the inner annular body **6** is concentrically positioned within the outer annular body **2.** The connector ring **9** is perimetrically connected the outer annular body **2** and the inner annular body **6** as the structural body between the inner annular body **6** and the outer annular body **2.** The connector ring **9** is terminally positioned to a first outer edge **3** of the outer annular body **2** and a first inner edge **7** of the inner annular body **6** so that the connector ring **9** can be positioned flush with the inner annular body **6** and the outer annular body **2.** When the present invention is secured within the user's hand, the user can use their fingers to apply upward tension to the inner annular body **6** thus pressing the connector ring **9** against the user's palm. Simultaneously, the user can user their palm to apply tension to the connector ring **9** thus pressing the inner annular body **6** towards the user's fingers. As a result, the user can position their thumb over the outer annular body **2** to operate the stud adjustment system so that the bolt pattern of the adjustable wheel balancing clamping tool can be adjusted. The adjustable-bolt-pattern-adaptor attachment mechanism **10** is connected to the outer annular body **2** and the inner annular body **6** and functions as the attachment mechanism **10** that secures the present invention to the adjustable wheel balancing clamping tool. Furthermore, the adjustable-bolt-pattern-adaptor attachment mechanism **10** and the connector ring **9** are oppositely oriented of each other about the outer annular body **2** and the inner annular body **6** so that the stud adjustment system can be independently operated from the gripping body **1.**

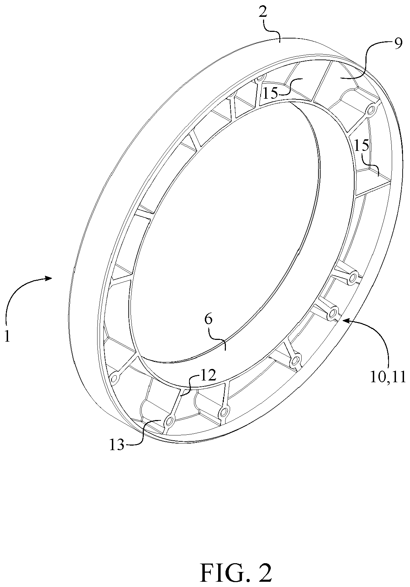

In reference to FIG. **2-3****,** the adjustable-bolt-pattern-adaptor attachment mechanism **10** preferably comprises a plurality of fasteners **11** that is radially positioned in between the outer annular body **2** and the inner annular body **6.** The plurality of fasteners **11** functions as the attachment bodies for the gripping body **1** so that the present invention can be removably mounted to the adjustable wheel balancing clamping tool.

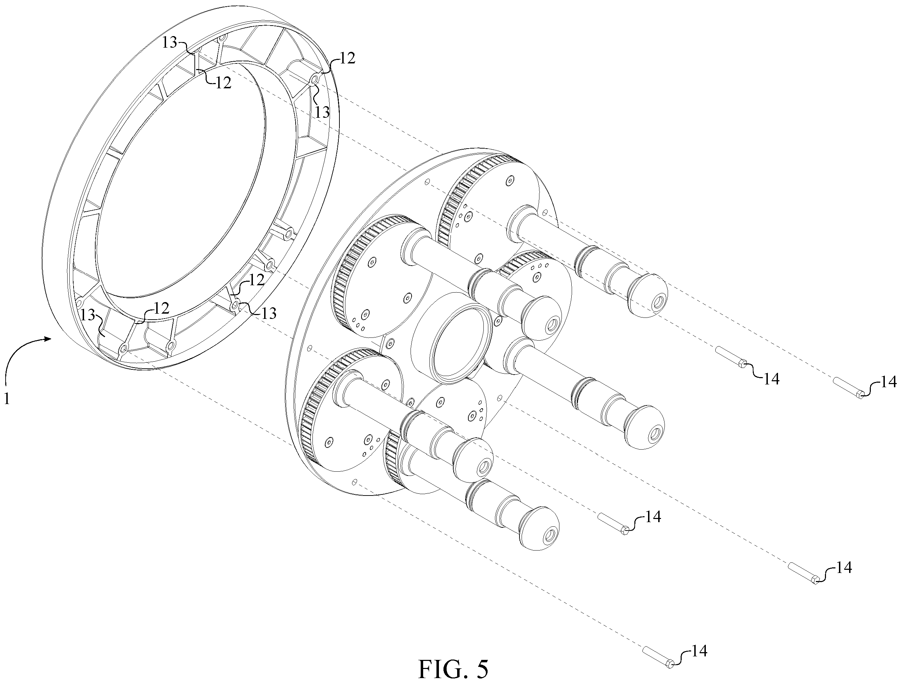

In reference to FIG. **2-3** and FIG. **5****,** the plurality of fasteners **11** each comprises a supporting rib **12,** a female fastening portion **13,** and a male fastening portion **14.** More specifically, the supporting rib **12** is generally a rectangular body and terminally connected to the outer annular body **2,** the inner annular body **6,** and the connector ring **9.** As a result, the supporting rib **12** is able to firmly secure to the gripping body **1** with three different connection points. The female fastening portion **13** is generally cylindrical body and connected to the supporting rib **12** and oriented away from the connector ring **9.** In other words, the female fastening portion **13** is integrated into the supporting rib **12** so that an opening of the female fastening portion **13** is oriented in the opposite direction in comparison to the connector ring **9.** The male fastening portion **14** is removably engaged with the female fastening portion **13** in such a way that the male fastening portion **14** and the female fastening portion **13** can collectively compress a base plate of the adjustable wheel balancing clamping tool. Preferably, the male fastening portion **14** and the female fastening portion **13** are threadedly interconnected to each other so that the user is able to easily interact with the male fastening portion **14** with standard tooling apparatus such as screwdrivers, ratchet wrenches, and impact drivers. More specifically, the male fastening portion **14** is designed to traverse through a cavity of the base plate so that the male fastening portion **14** can threadedly interconnect with the female fastening portion **13.**

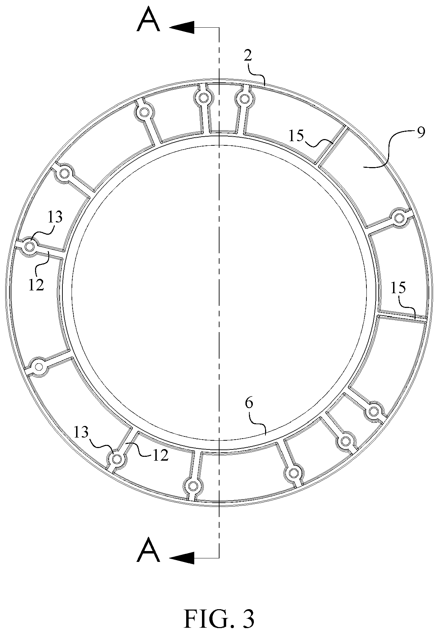

In reference to FIG. **3****,** the adjustable-bolt-pattern-adaptor attachment mechanism **10** further comprises a plurality of structural ribs **15** in addition to the plurality of fasteners **11.** The plurality of structural ribs **15** is terminally connected to the outer annular body **2,** the inner annular body **6,** and the connector ring **9** to improve the structural integrity of the gripping body **1.** Furthermore, each of the plurality of structural ribs **15** is radially spaced within the plurality of fasteners **11** to further structurally strengthen the each of the plurality of fasteners **11.** As a result, the present invention can eliminate any structural misalignment as the female fastening portion **13** of each of the plurality of fasteners **11** can concentrically align with the cavities of the base plate to receive the male fastening portion **14.**

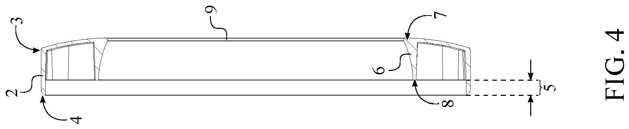

In reference to FIG. **4****,** the outer annular body **2** further comprises a second outer edge **4** and a lip section **5,** and the inner annular body **6** further comprises a second inner edge **8.** The second outer edge **4** and the first outer edge **3** are oppositely positioned of each other about the outer annular body **2,** wherein the second outer edge **4** is preferably a free hanging edge. The second inner edge **8** and the first inner edge **7** are oppositely positioned of each other about the inner annular body **6,** wherein the second inner edge **8** is preferably a free hanging edge. Furthermore, the supporting rib **12** is positioned flush to the second inner edge **8** so that the second inner edge **8** and the plurality of fasteners **11** can position flat against the base plate. The lip section **5** is delineated from the supporting rib **12** to the second outer edge **4** so that the lip section **5** can perimetrically encircle around the base plate thus providing a precise alignment between the gripping body **1** and the base plate. Resultantly, the user can stationary grasp the adjustable wheel balancing clamping tool via the plurality of fasteners **11** and the gripping body **1** and adjust the bolt pattern with respect to the corresponding wheel by only utilizing one hand.

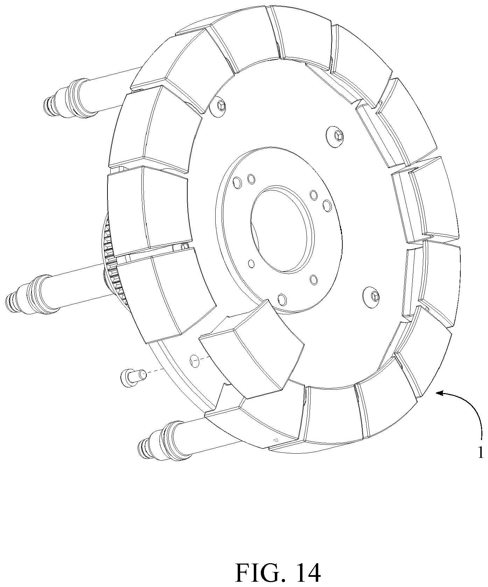

Even though the gripping body **1** and the adjustable-bolt-pattern-adaptor attachment mechanism **10** are preferably configured as a single apparatus, in alternative embodiments of the present invention, the gripping body **1** and the adjustable-bolt-pattern-adaptor attachment mechanism **10** can be made as a plurality of segmented pieces as shown in FIG. **14****.** In reference to an exemplary embodiment, the outer annular body **2,** the inner annular body **6,** the connector ring **9,** and the adjustable-bolt-pattern-adaptor attachment mechanism **10** can be manufactured as separate components and assembled together. In reference to another exemplary embodiment, the gripping body **1** and the adjustable-bolt-pattern-adaptor attachment mechanism 10 can also be segmented into a plurality of radial sections as the general profile of the gripping body 1 is collectively configured through the plurality of radial sections.

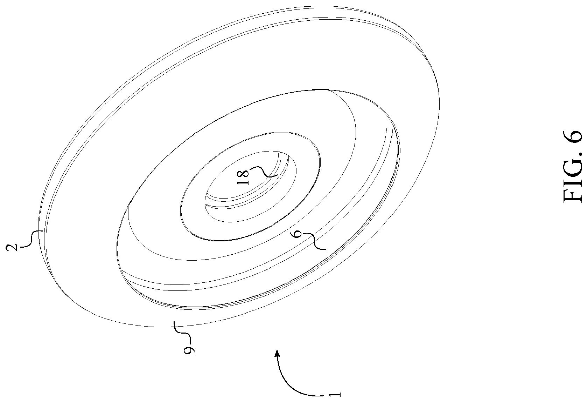

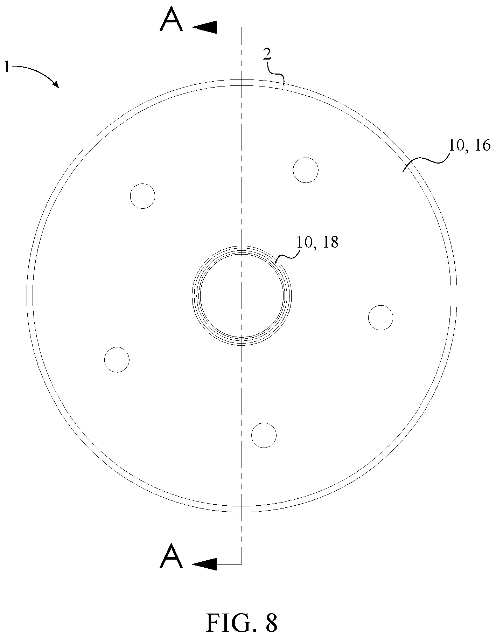

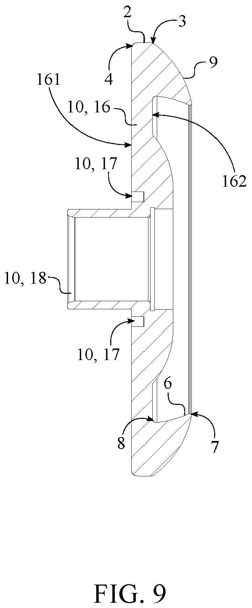

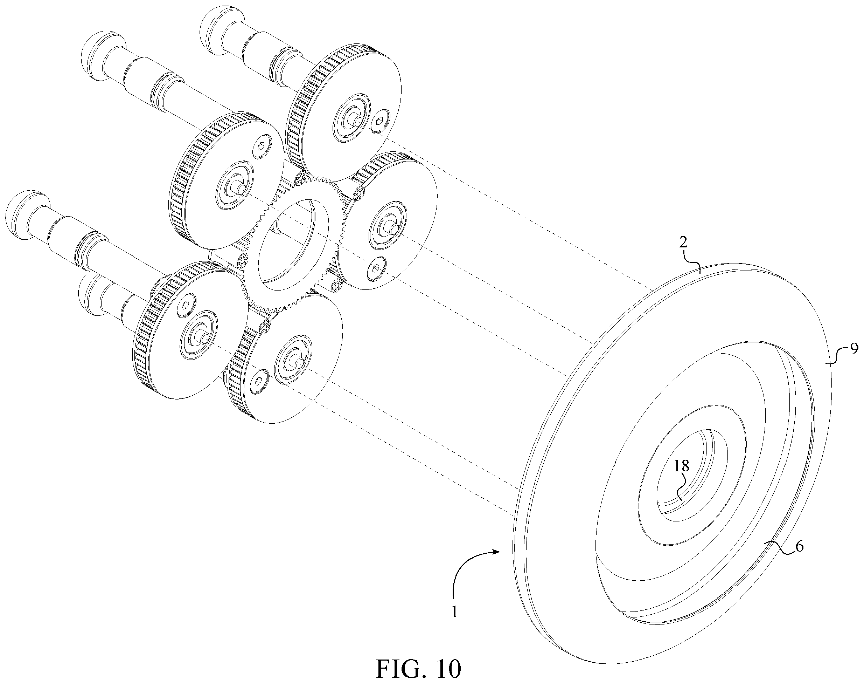

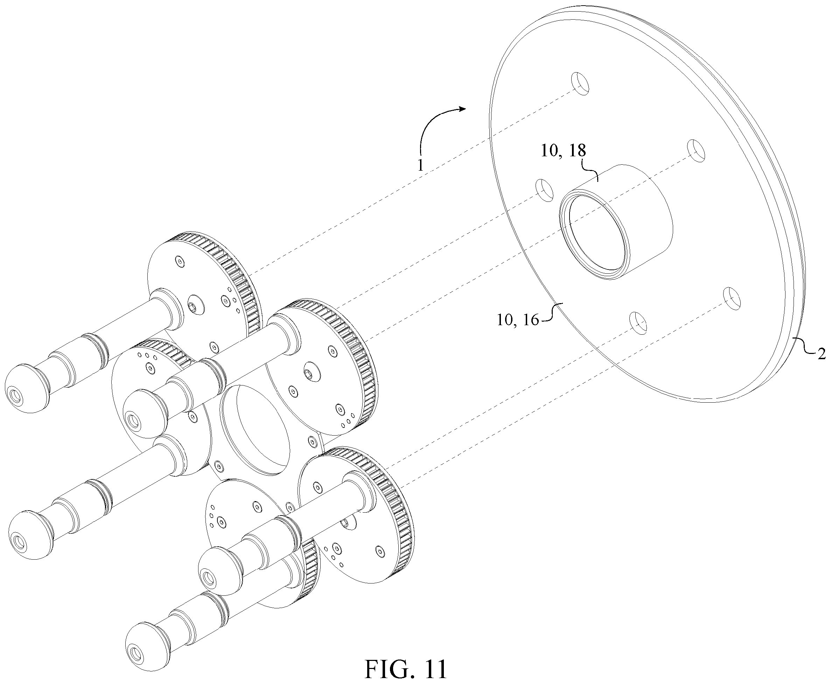

In reference to FIG. 6-11, the present invention can be alternatively integrated into the base plate of the adjustable wheel balancing clamping tool. Thus, the adjustable-bolt-pattern-adaptor attachment mechanism 10 may comprise a base plate 16, a plurality of pin-receiving recesses 17, and a central bushing 18. In other words, the functionality of the present invention and the base plate 16 are integrated to each other as the general profile of the gripping body 1 and the base plate 16 are constructed as a singular body. More specifically, the base plate 16 is radially connected to the outer annular body 2 and the inner annular body 6 thus enclosing the internal space between the outer annular body 2 and the inner annular body 6. The base plate 16 is terminally connected to the second outer edge 4 and the second inner edge 8 thus providing a structural base to configure the stud adjustment system around the central bushing 18. The central bushing 18 is concentrically connected to the base plate 16 so that the central bushing 18 can be mounted to the wheel balancing machine. The plurality of pin-receiving recesses 17 traverses into the base plate 16 and is distributed around the central bushing 18. More specifically, a first base surface 161 of the base plate 16 is radially connected onto the second inner edge 8 as the first base surface 161 extends from the inner annular body 6 to the central bushing 18. A second base surface 162 of the base plate 16 is positioned flush with the second outer edge 4 as the second base surface 162 extends from the second outer edge 4 to the central bushing 18. Resultantly, the user can stationarily grasp the adjustable wheel balancing clamping tool via the outer annular body 2 and the inner annular body 6 with respect to the first base surface 161 so that the bolt pattern can be adjusted via the stud adjustment system that is positioned adjacent to the second base surface 162 by only utilizing one hand.

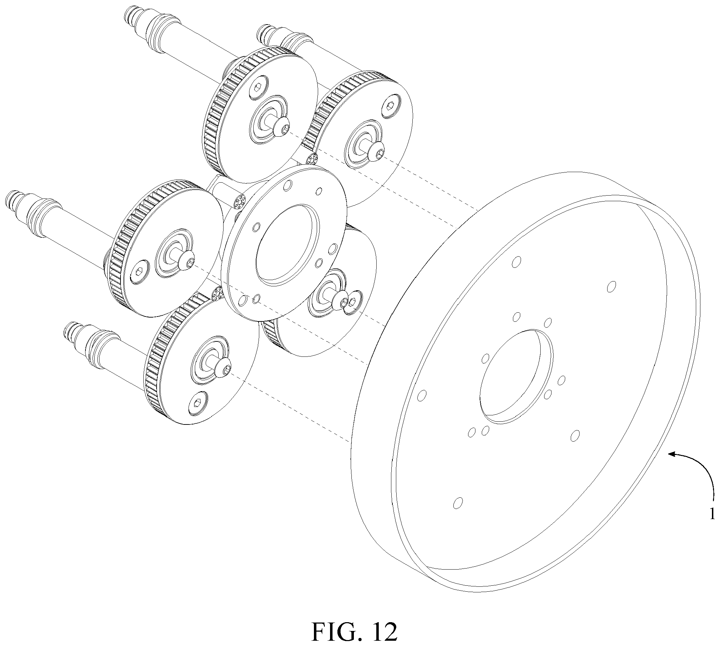

In reference to FIG. **12****,** the present invention can be alternatively integrated into the base plate of the adjustable wheel balancing clamping tool thus defining an alternative embodiment. More specifically, the base plate is radially connected to the outer annular body **2.** The base plate is terminally connected to the second outer edge **4** thus providing a structural base to configure the stud adjustment system the central bushing. The central bushing is concentrically connected to the base plate so that the central bushing can be mounted to the wheel balancing machine.

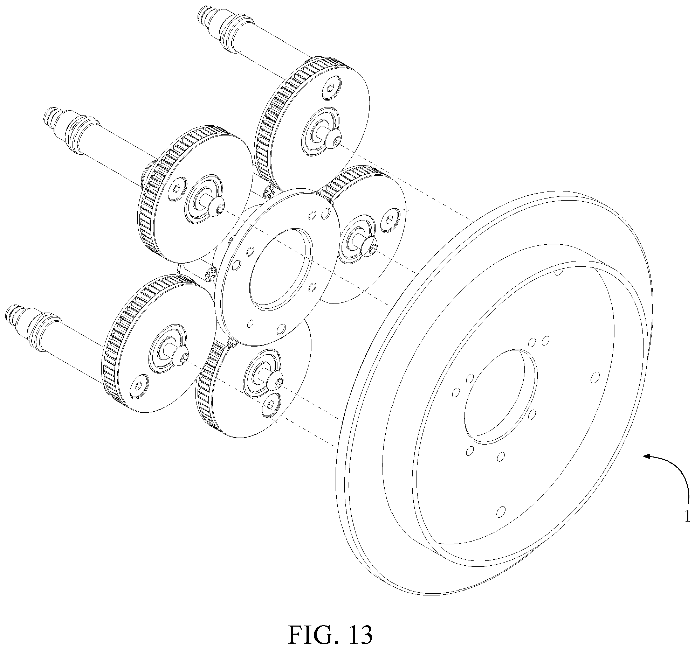

In reference to FIG. **13****,** the present invention can be alternatively integrated into the base plate of the adjustable wheel balancing clamping tool thus defining another alternative embodiment. More specifically, the base plate is radially connected to the inner annular body **6.** The base plate is terminally connected to the second inner edge **8** thus providing a structural base to configure the stud adjustment system the central bushing. The central bushing is concentrically connected to the base plate so that the central bushing can be mounted to the wheel balancing machine.

Although the invention has been explained in relation to its preferred embodiment, it is to be understood that many other possible modifications and variations can be made without departing from the scope of the invention as hereinafter claimed.

## Claims

1. A gripping tool for adjustable wheel balancing clamping tool, wherein the gripping tool comprises:
a gripping body (1);
an adjustable-bolt-pattern-adaptor attachment mechanism (10);
the gripping body (1) comprising an outer annular body (2), an inner annular body (6), and a connector ring (9);
the inner annular body (6) being concentrically positioned within the outer annular body (2);
the connector ring (9) being perimetrically connected the outer annular body (2) and the inner annular body (6);
a cross section between the outer annular body (2), the connector ring (9), and the inner annular body (6) being a U-shaped cross section;
the connector ring (9) being terminally positioned to a first outer edge (3) of the outer annular body (2) and a first inner edge (7) of the inner annular body (6);
the adjustable-bolt-pattern-adaptor attachment mechanism (10) being connected to the outer annular body (2) and the inner annular body (6);
the adjustable-bolt-pattern-adaptor attachment mechanism (10) and the connector ring (9) being oppositely oriented of each other about the outer annular body (2) and the inner annular body (6);
the adjustable-bolt-pattern-adaptor attachment mechanism (10) comprising a plurality of fasteners (11);
the plurality of fasteners (11) each comprising a supporting rib (12), a female fastening portion (13), and a male fastening portion (14);
the female fastening portion (13) being fixed in place along the supporting rib (12);
the female fastening portion (13) being positioned offset from the outer annular body (2);
the female fastening portion (13) being positioned offset from the inner annular body (6);
the female fastening portion (13) being oriented away from the connector ring (9);
the male fastening portion (14) being removably engaged with the female fastening portion (13); and
the male fastening portion (14) and the female fastening portion (13) being threadedly interconnected to each other,
**characterised in** the plurality of fasteners (26) being radially positioned in between the outer annular body and the inner annular body
and in the supporting rib (14) being terminally connected to the outer annular body, the inner annular body (6), and the connector ring (9);
and in the female fastening portion (13) being connected to the supporting rib (12).

2. The gripping tool as claimed in claim 1 comprising:
the outer annular body (2) further comprising a second outer edge (4) and a lip section (5);
the inner annular body (6) further comprising a second inner edge (8);
the second outer edge (4) and the first outer edge (3) being oppositely positioned of each other about the outer annular body (2);
the second inner edge (8) and the first inner edge (7) being oppositely positioned of each other about the inner annular body (6);
the supporting rib (12) being positioned flush to the second inner edge (8); and
the lip section (5) being delineated from the supporting rib (12) to the second outer edge (4).

3. The gripping tool as claimed in claim 1 comprising:
the adjustable-bolt-pattern-adaptor attachment mechanism (10) comprising a plurality of structural ribs (15); and
the plurality of structural ribs (15) being terminally connected to the outer annular body (2), the inner annular body (6), and the connector ring (9); and
the plurality of structural ribs (15) being radially interspersed amongst the plurality of fasteners (11).

4. A gripping tool for adjustable wheel balancing clamping tool, wherein the gripping tool comprises:
a gripping body (1);
an adjustable-bolt-pattern-adaptor attachment mechanism (10);
the gripping body (1) comprising an outer annular body (2), an inner annular body (6), and a connector ring (9);
the outer annular body (2) comprises a first outer edge (3) and a second outer edge (4);
the inner annular body (6) comprises a first inner edge (7) and a second inner edge (8);
the inner annular body (6) being concentrically positioned within the outer annular body (2);
the connector ring (9) being perimetrically connected the outer annular body (2) and the inner annular body (6);
the first outer edge (3) and the second outer edge (4) being oppositely positioned of each other about the outer annular body (2);
the first inner edge (7) and the second inner edge (8) being oppositely positioned of each other about the inner annular body (6);
the connector ring (9) being terminally positioned to the first outer edge (3) and the first inner edge (7);
the adjustable-bolt-pattern-adaptor attachment mechanism (10) being connected to the outer annular body (2) and the inner annular body (6);
the adjustable-bolt-pattern-adaptor attachment mechanism (10) comprising a base plate (16), a plurality of pin-receiving recesses (17), and a central bushing (18);
the base plate (16) being radially connected to the outer annular body (2) and the inner annular body (6);
the base plate (16) being terminally connected to the second outer edge (4) and the second inner edge (8);
the central bushing (18) being concentrically connected to the base plate
**characterised in that** the adjustable-bolt-pattern-adaptor attachment mechanism and the connector ring (9) being oppositely oriented of each other about the outer annular body (2) and the inner annular body (6);and **in that**
a protruding shape delineated between the outer annular body (2), the connector ring (9), and the inner annular body (6) being oriented in an opposite direction than the central bushing (18);
the plurality of pin-receiving recesses (17) traversing into the base plate (16);
the plurality of pin-receiving recesses (17) being angularly positioned offset from the protruding shape delineated between the outer annular body (2), the connector ring (9), and the inner annular body (6);
the plurality of pin-receiving recesses (17) being angularly positioned adjacent to the central bushing (18); and
the plurality of pin-receiving recesses (17) being distributed around the central bushing (18).

5. The gripping tool for adjustable wheel balancing clamping tool as claimed in claim 4 comprising:
the base plate (16) comprising a first base surface (161) and a second base surface (162);
the first base surface (161) being radially connected onto the second inner edge (8);
the first base surface (161) being extended from the outer annular body (2) to the central bushing (18);
the second base surface (162) being positioned flush with the second outer edge (4);
the second base surface (162) being extended from the second outer edge (4) to the central bushing (18);
each of the plurality of pin-receiving recesses (17) traversing into the base plate (16) from the first base surface (161); and
each of the plurality of pin-receiving recesses (17) positioned offset from the second base surface (162).

## Patentansprüche

1. Greifwerkzeug für verstellbares Radauswuchtspannwerkzeug, wobei das Greifwerkzeug umfasst:
einen Greifkörper (1);
einen Anbringungsmechanismus (10) für einen verstellbaren Lochkreisadapter;
wobei der Greifkörper (1) einen äußeren ringförmigen Körper (2), einen inneren ringförmigen Körper (6) und einen Verbinderring (9) umfasst;
der innere ringförmige Körper (6) konzentrisch innerhalb des äußeren ringförmigen Körpers (2) positioniert ist;
der Verbinderring (9) umkreisend mit dem äußeren ringförmigen Körper (2) und dem inneren ringförmigen Körper (6) verbunden ist;
ein Querschnitt zwischen dem äußeren ringförmigen Körper (2), dem Verbinderring (9) und dem inneren ringförmigen Körper (6) ein U-förmiger Querschnitt ist;
der Verbinderring (9) abschließend an einer ersten äußeren Kante (3) des äußeren ringförmigen Körpers (2) und einer ersten inneren Kante (7) des inneren ringförmigen Körpers (6) positioniert ist;
der Anbringungsmechanismus (10) für einen verstellbaren Lochkreisadapter mit dem äußeren ringförmigen Körper (2) und dem inneren ringförmigen Körper (6) verbunden ist;
der Anbringungsmechanismus (10) für einen verstellbaren Lochkreisadapter und der Verbinderring (9) entgegengesetzt zueinander um den äußeren ringförmigen Körper (2) und den inneren ringförmigen Körper (6) ausgerichtet sind;
der Anbringungsmechanismus (10) für einen verstellbaren Lochkreisadapter eine Vielzahl von Befestigungselementen (11) umfasst;
die Vielzahl von Befestigungselementen (11) jeweils eine Stützrippe (12), einen weiblichen Befestigungsteil (13) und einen männlichen Befestigungsteil (14) umfasst;
der weibliche Befestigungsteil (13) sicher entlang der Stützrippe (12) befestigt ist;
der weibliche Befestigungsteil (13) von dem äußeren ringförmigen Körper (2) versetzt positioniert ist;
der weibliche Befestigungsteil (13) von dem inneren ringförmigen Körper (6) versetzt positioniert ist;
der weibliche Befestigungsteil (13) von dem Verbinderring (9) weg ausgerichtet ist;
der männliche Befestigungsteil (14) lösbar mit dem weiblichen Befestigungsteil (13) in Eingriff gebracht ist und
der männliche Befestigungsteil (14) und der weibliche Befestigungsteil (13) durch ein Gewinde miteinander verbunden sind,
**dadurch gekennzeichnet, dass** die Vielzahl von Befestigungselementen (26) radial zwischen dem äußeren ringförmigen Körper und dem inneren ringförmigen Körper positioniert ist
und dass die Stützrippe (14) abschließend mit dem äußeren ringförmigen Körper, dem inneren ringförmigen Körper (6) und dem Verbinderring (9) verbunden ist;
und dass der weibliche Befestigungsteil (13) mit der Stützrippe (12) verbunden ist.

2. Greifwerkzeug nach Anspruch 1, umfassend:
der äußere ringförmige Körper (2) umfasst weiterhin eine zweite äußere Kante (4) und
einen Lippenabschnitt (5);
der innere ringförmige Körper (6) umfasst weiterhin eine zweite innere Kante (8);
die zweite äußere Kante (4) und die erste äußere Kante (3) sind entgegengesetzt zueinander um den äußeren ringförmigen Körper (2) positioniert;
die zweite innere Kante (8) und die erste innere Kante (7) sind entgegengesetzt zueinander um den inneren ringförmigen Körper (6) positioniert;
die Stützrippe (12) ist bündig mit der zweiten inneren Kante (8) positioniert und
der Lippenabschnitt (5) ist von der Stützrippe (12) zu der zweiten äußeren Kante (4) abgegrenzt.

3. Greifwerkzeug nach Anspruch 1, umfassend:
der Anbringungsmechanismus (10) für einen verstellbaren Lochkreisadapter umfasst eine Vielzahl von Strukturrippen (15) und
die Vielzahl von Strukturrippen (15) ist abschließend mit dem äußeren ringförmigen Körper (2), dem inneren ringförmigen Körper (6) und dem Verbinderring (9) verbunden und
die Vielzahl von Strukturrippen (15) ist unter der Vielzahl von Befestigungselementen (11) radial eingestreut.

4. Greifwerkzeug für verstellbares Radauswuchtspannwerkzeug, wobei das Greifwerkzeug umfasst:
einen Greifkörper (1);
einen Anbringungsmechanismus (10) für einen verstellbaren Lochkreisadapter;
wobei der Greifkörper (1) einen äußeren ringförmigen Körper (2), einen inneren ringförmigen Körper (6) und einen Verbinderring (9) umfasst;
der äußere ringförmige Körper (2) eine erste äußere Kante (3) und eine zweite äußere Kante (4) umfasst;
der innere ringförmige Körper (6) eine erste innere Kante (7) und eine zweite innere Kante (8) umfasst;
der innere ringförmige Körper (6) konzentrisch innerhalb des äußeren ringförmigen Körpers (2) positioniert ist;
der Verbinderring (9) umkreisend mit dem äußeren ringförmigen Körper (2) und dem inneren ringförmigen Körper (6) verbunden ist;
die erste äußere Kante (3) und die zweite äußere Kante (4) entgegengesetzt zueinander um den äußeren ringförmigen Körper (2) positioniert sind;
die erste innere Kante (7) und die zweite innere Kante (8) entgegengesetzt zueinander um den inneren ringförmigen Körper (6) positioniert sind;
der Verbinderring (9) abschließend an der ersten äußeren Kante (3) und der ersten inneren Kante (7) positioniert ist;
der Anbringungsmechanismus (10) für einen verstellbaren Lochkreisadapter mit dem äußeren ringförmigen Körper (2) und dem inneren ringförmigen Körper (6) verbunden ist;
der Anbringungsmechanismus (10) für einen verstellbaren Lochkreisadapter eine Basisplatte (16), eine Vielzahl von Stiftaufnahmeaussparungen (17) und eine zentrale Lagerbuchse (18) umfasst;
die Basisplatte (16) radial mit dem äußeren ringförmigen Körper (2) und dem inneren ringförmigen Körper (6) verbunden ist;
die Basisplatte (16) abschließend mit der zweiten äußeren Kante (4) und der zweiten inneren Kante (8) verbunden ist;
die zentrale Lagerbuchse (18) konzentrisch mit der Basisplatte verbunden ist;
**dadurch gekennzeichnet, dass** der Anbringungsmechanismus für einen verstellbaren Lochkreisadapter und der Verbinderring (9) entgegengesetzt zueinander um den äußeren ringförmigen Körper (2) und den inneren ringförmigen Körper (6) ausgerichtet sind und dass
eine vorragende Form, die zwischen dem äußeren ringförmigen Körper (2), dem Verbinderring (9) und dem inneren ringförmigen Körper (6) abgegrenzt ist, in einer entgegengesetzten Richtung zu der zentralen Lagerbuchse (18) ausgerichtet ist;
die Vielzahl von Stiftaufnahmeaussparungen (17) in die Basisplatte (16) verläuft;
die Vielzahl von Stiftaufnahmeaussparungen (17) versetzt von der vorragenden Form, die zwischen dem äußeren ringförmigen Körper (2), dem Verbinderring (9) und dem inneren ringförmigen Körper (6) abgegrenzt ist, abgewinkelt positioniert ist;
die Vielzahl von Stiftaufnahmeaussparungen (17) angrenzend an die zentrale Lagerbuchse (18) abgewinkelt positioniert ist und
die Vielzahl von Stiftaufnahmeaussparungen (17) um die zentrale Lagerbuchse (18) verteilt ist.

5. Greifwerkzeug für verstellbares Radauswuchtspannwerkzeug nach Anspruch 4, umfassend:
die Basisplatte (16) umfasst eine erste Basisfläche (161) und eine zweite Basisfläche (162);
die erste Basisfläche (161) ist radial auf der zweiten inneren Kante (8) verbunden;
die erste Basisfläche (161) erstreckt sich von dem äußeren ringförmigen Körper (2) zu der zentralen Lagerbuchse (18);
die zweite Basisfläche (162) ist bündig mit der zweiten inneren Kante (4) positioniert;
die zweite Basisfläche (162) erstreckt sich von der zweiten äußeren Kante (3) zu der zentralen Lagerbuchse (18);
jede von der Vielzahl von Stiftaufnahmeaussparungen (17) verläuft in die Basisplatte (16) von der ersten Basisfläche (161) und
jede von der Vielzahl von Stiftaufnahmeaussparungen (17) ist versetzt von der zweiten Basisfläche (162) positioniert.

## Revendications

1. Un outil de préhension pour un outil de serrage d'équilibrage de roue réglable, dans lequel l'outil de préhension comprend :
un corps de préhension (l) ;
un mécanisme de fixation d'adaptateur à modèle de boulon réglable (10) ;
le corps de préhension (1) comprenant un corps annulaire externe (2), un corps annulaire interne (6) et une bague de connexion (9) ;
le corps annulaire interne (6) étant positionné de manière concentrique à l'intérieur du corps annulaire externe (2) ;
la bague de connexion (9) étant reliée de manière périmétrique au corps annulaire externe (2) et au corps annulaire interne (6) ;
une section transversale entre le corps annulaire externe (2), la bague de connexion (9) et le corps annulaire interne (6) étant une section transversale en forme de U ;
la bague de connexion (9) étant positionnée de manière terminale sur un premier bord externe (3) du corps annulaire externe (2) et un premier bord interne (7) du corps annulaire interne (6) ;
le mécanisme de fixation de l'adaptateur à motif de boulon réglable (10) étant connecté au corps annulaire externe (2) et au corps annulaire interne (6) ;
le mécanisme de fixation de l'adaptateur à motif de boulon réglable (10) et la bague de connexion (9) étant orientés de manière opposée l'un par rapport à l'autre autour du corps annulaire externe (2) et du corps annulaire interne (6) ;
le mécanisme de fixation d'adaptateur de modèle de boulon réglable (l0) comprenant une pluralité d'éléments de fixation (11) ;
la pluralité d'éléments de fixation (11) comprenant chacun une nervure de support (12), une partie de fixation femelle (13) et une partie de fixation mâle (14) ;
la partie de fixation femelle (13) étant fixée en place le long de la nervure de support (12)
la partie de fixation femelle (13) étant positionnée de manière décalée par rapport au corps annulaire externe (2) ;
la partie de fixation femelle (13) étant positionnée de manière décalée par rapport au corps annulaire interne (6) ;
la partie de fixation femelle (13) étant orientée à l'opposé de la bague de connexion (9) ;
la partie de fixation mâle (14) étant engagée de manière amovible avec la partie de fixation femelle (13) ;
et la partie de fixation mâle (14) et la partie de fixation femelle (13) étant interconnectées par filetage l'une à l'autre, **caractérisé en ce que** la pluralité d'éléments de fixation (26) est positionnée radialement entre le corps annulaire externe et le corps annulaire interne et **en ce que** la nervure de support (14) est connectée de manière terminale au corps annulaire externe, au corps annulaire interne (6) et à la bague de connexion (9) ; et **en ce que** la partie de fixation femelle (13) est connectée à la nervure de support (12).

2. L'outil de préhension selon la revendication 1, comprenant :
le corps annulaire externe (2) comprenant en outre un second bord externe (4) et une section de lèvre (5) ;
le corps annulaire interne (6) comprenant en outre un second bord interne (8) ;
le second bord externe (4) et le premier bord externe (3) étant positionnés de manière opposée l'un par rapport à l'autre autour du corps annulaire externe (2) ;
le second bord interne (8) et le premier bord interne (7) étant positionnés de manière opposée l'un par rapport à l'autre autour du corps annulaire interne (6) ;
la nervure de support (12) étant positionnée à niveau avec le second bord interne (8) ;
et la section de lèvre (5) étant délimitée de la nervure de support (12) au second bord externe (4).

3. L'outil de préhension selon la revendication 1, comprenant :
le mécanisme de fixation d'adaptateur de modèle de boulon réglable (10) comprenant une pluralité de nervures structurelles (15) ; et la pluralité de nervures structurelles (15) étant reliées de manière terminale au corps annulaire externe (2), au corps annulaire interne (6) et à la bague de connexion (9) ; et la pluralité de nervures structurelles (15) étant radialement intercalée parmi la pluralité d'éléments de fixation (11).

4. Un outil de préhension pour un outil de serrage d'équilibrage de roue réglable, dans lequel l'outil de préhension comprend :
un corps de préhension (l) ;
un mécanisme de fixation d'adaptateur à modèle de boulon réglable (10) ;
le corps de préhension (1) comprenant un corps annulaire externe (2), un corps annulaire interne (6) et une bague de connexion (9) ;
le corps annulaire externe (2) comprend un premier bord externe (3) et un second bord externe (4) ;
le corps annulaire interne (6) comprend un premier bord interne (7) et un second bord interne (8) ;
le corps annulaire interne (6) étant positionné de manière concentrique à l'intérieur du corps annulaire externe (2) ;
la bague de connexion (9) étant reliée de manière périmétrique au corps annulaire externe (2) et au corps annulaire interne (6) ;
le premier bord externe (3) et le second bord externe (4) étant positionnés de manière opposée l'un par rapport à l'autre autour du corps annulaire externe (2)
le premier bord interne (7) et le second bord interne (8) étant positionnés de manière opposée l'un par rapport à l'autre autour du corps annulaire interne (6) ;
la bague de connexion (9) étant positionnée de manière terminale sur le premier bord externe (3) et le premier bord interne (7) ;
le mécanisme de fixation de l'adaptateur à motif de boulon réglable (10) étant connecté au corps annulaire externe (2) et au corps annulaire interne (6) ;
le mécanisme de fixation d'adaptateur de modèle de boulon réglable (10) comprenant une plaque de base (16), une pluralité d'évidements de réception de broches (17) et une bague centrale (18) ;
la plaque de base (16) étant reliée de manière radiale au corps annulaire externe (2) et au corps annulaire interne (6) ;
la plaque de base (16) étant reliée de manière terminale au second bord externe (4) et au second bord interne (8) ;
la douille centrale (18) étant reliée de manière concentrique à la plaque de base, **caractérisée en ce que** le mécanisme de fixation de l'adaptateur à motif de boulon réglable et la bague de connexion (9) étant orientés de manière opposée l'un par rapport à l'autre autour du corps annulaire externe (2) et du corps annulaire interne (6) ; et **en ce qu'**une forme en saillie délimitée entre le corps annulaire externe (2), la bague de connexion (9) et le corps annulaire interne (6) étant orientés dans une direction opposée à celle de la douille centrale (18) ;
la pluralité d'évidements de réception de broches (17) traversant la plaque de base (16) ;
la pluralité d'évidements de réception de broches (17) étant positionnée angulairement de manière décalée par rapport à la forme en saillie délimitée entre le corps annulaire externe (2), la bague de connexion (9) et le corps annulaire interne (6) ;
la pluralité d'évidements de réception de broches (17) étant positionnée angulairement de manière adjacente à la douille centrale (18) ; et
la pluralité d'évidements de réception de broches (17) étant répartie autour de la douille centrale (18).

5. L'outil de préhension pour outil de serrage d'équilibrage de roue réglable selon la revendication 4, comprenant :
la plaque de base (16) comprenant une première surface de base (161) et une seconde surface de base (162) ; la première surface de base (161) étant reliée de manière radiale sur le second bord interne (8) ;
la première surface de base (161) s'étendant du corps annulaire externe (2) jusqu'à la douille centrale (18) ;
la seconde surface de base (162) étant positionnée à niveau avec le second bord externe (4) ;
la seconde surface de base (162) s'étendant du second bord externe (4) jusqu'à la douille centrale (18) ;
chacun de la pluralité d'évidements de réception de broches (17) traversant la plaque de base (16) à partir de la première surface de base (161) ; et chacun de la pluralité d'évidements de réception de broches (17) positionné de manière décalée par rapport à la seconde surface de base (162).
